Europäisches Patentamt

European Patent Office

Office européen des brevets

(11) Publication number: **0 231 596 B1**

## EUROPEAN PATENT SPECIFICATION

(45) Date of publication of patent specification: **22.01.92**

(51) Int. Cl.⁵: **G01H 11/06**, G10K 11/34, H04R 19/00

(21) Application number: **86308843.1**

(22) Date of filing: **13.11.86**

(54) Electrostatic type atmospheric ultrasonic transducer.

(30) Priority: **24.12.85 JP 289290/85**

(43) Date of publication of application:
**12.08.87 Bulletin 87/33**

(45) Publication of the grant of the patent:
**22.01.92 Bulletin 92/04**

(84) Designated Contracting States:
**DE GB**

(56) References cited:
**EP-A- 0 144 234**
**US-A- 3 936 791**
**US-A- 4 034 332**
**US-A- 4 262 399**
**US-A- 4 382 328**

**IBM TECHNICAL DISCLOSURE BULLETIN, vol. 20, no. 11B, April 1978, page 5047-5048: New York, US; R.J. VON GUTFELD: "Segmented electrode acoustic generator using electro-static excitation"**

(73) Proprietor: **AGENCY OF INDUSTRIAL SCIENCE AND TECHNOLOGY**
**3-1, 1-chome, Kasumigaseki**
**Chiyoda-ku Tokyo(JP)**

(72) Inventor: **Higuchi, Kohei c/o NEC Corporation**
**33-1, Shiba 5-chome**
**Minato-ku Tokyo(JP)**

(74) Representative: **Ben-Nathan, Laurence Albert et al**
**Urquhart-Dykes & Lord 91 Wimpole Street**
**London W1M 8AH(GB)**

## Description

The present invention relates to an atmospheric ultrasonic transducer and, more particularly, to an electrostatic type ultrasonic transducer equipped in a robot or various industial equipment to measure a distance between the equipment and an object located near the equipment or to recognize a size or shape of the object.

Inexpensive high-performance microcomputers have recently prevailed to automate equipment in various fields and to provide industrial robots. Currently available robots and automated equipment can perform only lifting and carrying of an object having a predetermined shape, size, or weight, as well as assembly or work according to a predetermined program.

Public consumers have, however, demanded a variety of products to bring about a need for producing a large number of items each at a small amount, thus giving rise to emergence of an FMX (Flexible Manufacturing System). In the tendency of automation, various types of sensors replacing human perceptual senses are mounted in a robot or automated machine, and the robot or machine must have a judging function using these sensors. For example, if a robot wants to lift an object, it must find the object with its visual sensors. For this purpose, for example, electronic scanning is performed to find the object. The robot comes close to the object by using its distance sensor while electronic scanning is being performed. Finally, the robot uses a tactile sensor to detect hardness of the object and a reaction force upon grasping of the object. Among the sensors arranged in the robot, the distance sensor detects distance information representing a short distance which cannot be detected by the visual sensor. The distance sensor is assumed to be suitably constituted by an atmospheric ultrasonic arrangement.

A conventional atmospheric ultrasonic transducer of this type is represented by a transducer using resonance of a piezoelectric element such as a PZT or an electrostatic transducer. Typical examples of the electrostatic type transducer are audio equipment such as a condenser speaker and a condenser microphone. These devices are used in a low frequency range, i.e., an audible frequency range and are very popular as typical electroacoustic transducers. The electrostatic type atmospheric ultrasonic transducer is arranged such that an insulating frame is mounted on a metal plate electrode, and a polymer film is adhered thereon. A metal deposition film made of aluminum or gold is formed on the upper surface of the polymer film so that the entire area of the film surface is kept at a given potential. The metal film on the film surface is connected to a ground electrode and is kept at the ground potential. With this arrangement, if a DC bias voltage is applied to the metal electrode, the polymer film is attracted to the metal plate electrode. In this state, when an AC signal is applied to the electrode, the film vibrates to generate an ultrasonic wave in air. In the case of a microphone, the polymer film is vibrated by the sound wave propagating in air, and a change in electrostatic capacitance between the ground electrode and the metal plate electrode caused by the vibration of the polymer film is detected. The detection signal is amplified by an amplifier. This arrangement requires a DC bias circuit. However, another conventional arrangement eliminates the DC bias circuit by adapting a charged electret film. The conventional speaker and microphone using these transducers do not have high efficiency but have good frequency characteristics.

There is an electrostatic type ultrasonic transducer used as a range finder sensor for an automatic focusing camera. In this transducer, a gold-plated polymer film is formed on one major surface of a recessed and projected aluminum backplate. The peripheral portion of the polymer film is placed on an insulating base and is pressed by a metal cover. The lower surface of the backplate is then urged by a leaf spring. A transducer of this type is disclosed in U.S.P. No. 4,081,626 issued on March 28, 1978. In order to drive this transducer, the gold-plated polymer film is grounded through the metal cover, a DC voltage of about 300 V is applied to the aluminum plate, and an AC signal of ±150 V is input to the aluminum plate. The polymer film is attracted to the aluminum plate in response to the AC input signal to generate an ultrasonic wave. In order to receive the ultrasonic wave, the polymer film is vibrated by the ultrasonic wave to change a capacitance of a capacitor constituted by the polymer film and the aluminum electrode, thereby detecting a change in capacitance of the capacitor and hence detecting an ultrasonic wave by a change in charge induced at the electrode. This electrostatic type ultrasonic transducer undesirably requires a large drive voltage but has a simple structure and good frequency characteristics.

A trial ultrasonic transducer using silicon IC techniques has been reported by, for example, Otani et al, Japanese Journal of Applied Physics, vol. 23 (1984), Supplement 23-1, PP. 133 - 135. In this ultrasonic transducer, a boron diffusion layer having a high concentration is formed on the surface of a silicon substrate, and the silicon region around and below the boron diffusion layer is anisotropically etched to obtain a cantilever consisting of the boron diffusion layer. A platinum electrode, a piezoelectric film made of zinc titanate, and an aluminum electrode are deposited on the cantilever to constitute the ultrasonic transducer. In order to drive the ultrasonic transducer, an AC signal is applied between the platinum and aluminum electrodes to warp the piezoelectric film so that the cantilever resonates to generate an ultrasonic wave. In order to receive an ultrasonic wave, the cantilever is resonated by the input ultrasonic wave to detect a polarized voltage appearing across the piezoelectric film.

The first and second electrostatic transducers described above have a simple structure. There has been no proposal for electronically scanning the atmospheric ultrasonic wave to recognize an object by using these electrostatic transducers. The third transducer described above can effectively form an element array or an IC. However, since the ultrasonic transducer element is operated on the basis of resonance, in order to prepare an electronic scanning type ultrasonic transducer requiring phase synchronization, the cantilever must be prepared with high mechanical precision to allow driving of all elements at an identical resonant frequency, thereby degrading the yield of the elements. In addition, the Q value showing the sharpness of element resonance is large, and the vibrations of the resonator are not easily attenuated. As a result, an ultrasonic wave reflected from an object located near the transducer cannot be measured.

EP-A-0,144,234 describes a transducer having the features of the preamble of Claim 1.

US-A-4,034,332 describes an ultrasonic transducer comprising a layer of dielectric material between two electrodes which in one embodiment each comprise elongate parallel strips which are set to be perpendicular to the strips of the other electrode.

It is, therefore, a principal object of the present invention to provide an improved atmospheric ultrasonic transducer for electrically changing an emission direction of an atmospheric ultrasonic wave emitted therefrom.

It is another object of the present invention to provide an atmospheric ultrasonic transducer capable of performing electronic scanning.

It is still another object of the present invention to provide an atmospheric ultrasonic transducer capable of measuring a sound wave reflected from an object located near the transducer.

It is still another object of the present invention to provide an atmospheric ultrasonic transducer having a higher yield than that of a conventional atmospheric ultrasonic transducer using circuit integration techniques.

It is still another object of the present invention to provide an atmospheric ultrasonic transducer capable of transmitting and receiving a sound wave of a signal source with good reproducibility.

In order to achieve the above objects of the present invention, the present inventor has made extensive studies on electrostatic type ultrasonic transducers.

In principle, since the electrostatic type ultrasonic transducer has flat frequency characteristics, the sound wave can be transmitted or received with good reproducibility for the signal source. In order to arrange an electrostatic type ultrasonic transducer array according to conventional techniques, if a film is incompletely fixed between the electrodes, the film vibrated upon application of a signal to one of the electrodes generates an ultrasonic wave propagating to the other of the electrodes. It is thus assumed that electronic scanning of the ultrasonic wave cannot be performed by crosstalk between the adjacent elements. However, the present inventor found that the ultrasonic wave could be electronically scanned substantially without crosstalk components by a simple structure wherein an electrode was divided into blocks. Since the vibration frequency of the piezoelectric element normally falls within the range of the 100 kHz to 1 MHz, the ultrasonic wave is greatly attenuated in air. From this point of view, the electrostatic transducer has an advantage over the transducers of other types.

The invention provides an atmospheric ultrasonic transducer comprising a first electrode formed on an insulating base and a polymer film formed on said first electrode and having a second electrode fixed on a surface of the polymer film opposite said first electrode, wherein one of said first and second electrodes is formed into an array of divided electrodes, characterized in that each of said first and second electrodes is formed into an array of divided electrodes, with the divided electrodes of the respective arrays being positioned in a one-to-one correspondence such as to reduce electrical crosstalk and to improve the directivity sensitivity.

Reference will now be made, by way of example, to the drawings, in which:-

Fig. 1 is a partially cut-away plan view showing an atmospheric ultrasonic transducer of a type to which the invention can be applied;

Fig. 2 is a sectional view of the transducer of Fig. 1 taken along the line II - II thereof;

Fig. 3 is a wiring diagram of a peripheral circuit when the atmospheric ultrasonic transducer of Fig. 1 is used as an ultrasonic scanner;

Fig. 4 is a block diagram of a programmable time delay circuit used in Fig. 3;

Fig. 5 is a chart showing positions of a sample and a microphone in an ultrasonic scanning test so as to examine the characteristics of the atmospheric ultrasonic transducer;

Figs. 6a, 6b and 6c are charts obtained by measuring the directivity characteristics of the atmospheric ultrasonic transducer when a test system in Fig. 5 is used;

Fig. 7 is a wiring diagram of a peripheral circuit when the atmospheric ultrasonic transducer is used as an ultrasonic receiver;

Fig. 8 is a partially cut-away perspective view of another similar electrostatic type atmospheric transducer of a type to which the present invention can be applied; and

Fig. 9 is a sectional view of an embodiment of an electrostatic type atmospheric transducer according to the invention.

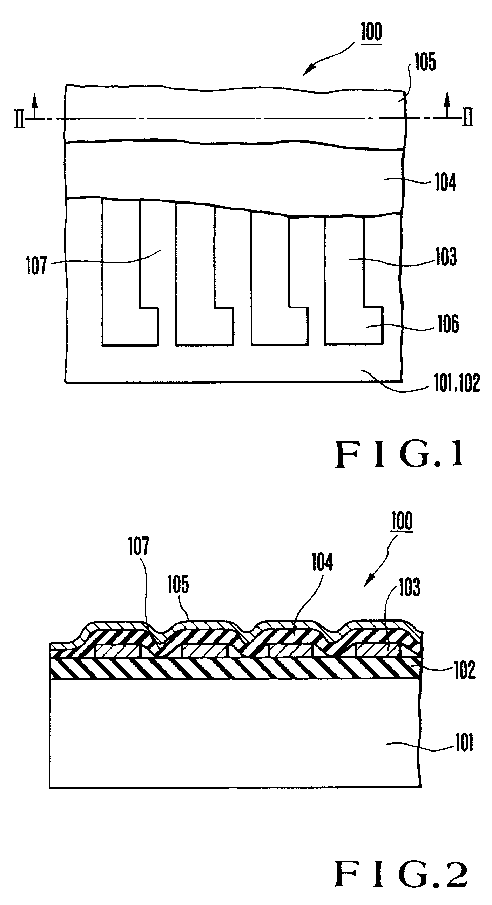

Figs. 1 and 2 show an electrostatic type atmospheric ultrasonic transducer of a type to which the present invention can be applied. Referring to Figs. 1 and 2, a transducer 100 is formed in the following manner.

A 1,000-Å thick silicon oxide film 102 is formed on a chip-like silicon substrate 101. A 5,000-Å thick aluminum film is formed on the silicon oxide film 102 by vacuum deposition. By using a known etching technique, the aluminum film is etched to obtain a plurality of divided electrodes 103. These divided electrodes 103 are parallel electrodes spaced apart from each other at a predetermined pitch. The width, pitch and number of electrodes are determined by directivity and a scanning angle. The directivity and scanning angle are determined by a drive frequency. In this construction, each electrode is 0.63 mm wide and 20 mm long; and 32 electrodes are arrayed at a pitch of 1 mm. The silicon substrate size is 35 mm x 25 mm. A 12- $\mu$m thick polyester film 104 is prepared. A 500-Å thick upper electrode 105 of a metal such as aluminum or gold is formed on one entire major surface of the polyester film 104. The polyester film 104, the divided electrodes 103, and the upper electrode 105 constitute a capacitor. The film 104 may be an extensible insulating polymer film made of polyethylene, polyethylene terephthalate (PETP), polysulfone, polyimide, fluorinated ethylene propylene (FEP), EPE, fluorinated resin such as PFA, and polyvinylidene fluoride (PVDF). The lower surface (the surface without the electrode 105) of the polymer film is adhered to the oxide film on the silicon substrate 101 at a proper tension force and is fixed at both ends of the silicon substrate 101 by an adhesive or a known fastening means (not shown). In this case, the polymer film may be adhered to exposed portions of an oxide film 107 between the divided electrodes 103. However, the polymer film need not be adhered to these exposed portions since the film is attracted to the divided electrodes 103 by their electrostatic force. In other words, only the peripheral portion of the polymer film 104 need be adhered to the oxide film 107 on the silicon substrate 101. The ultrasonic element array can be prepared by a very simple process. The chip of the silicon substrate 101 is mounted in a package, and electrode pads 106 (Fig. 1) are connected to corresponding package pads (not shown) through bonding wires. The electrode 105 on the film 104 is wired by a conductive tape.

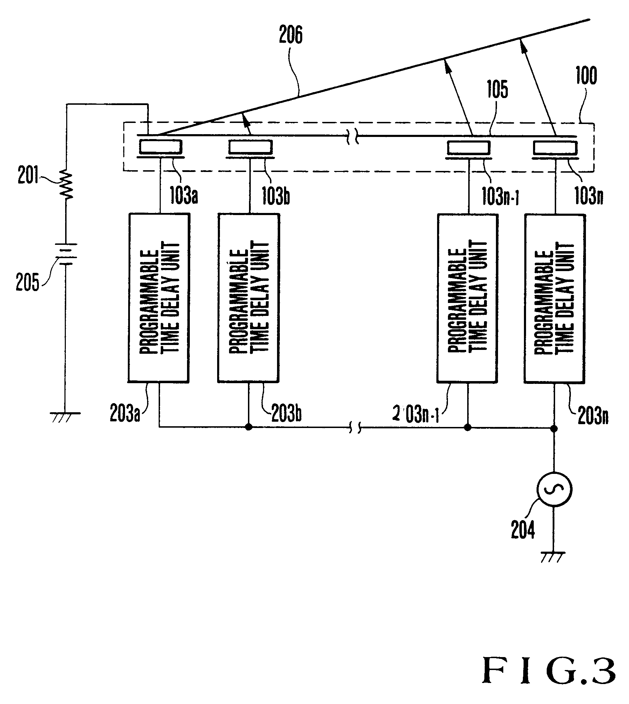

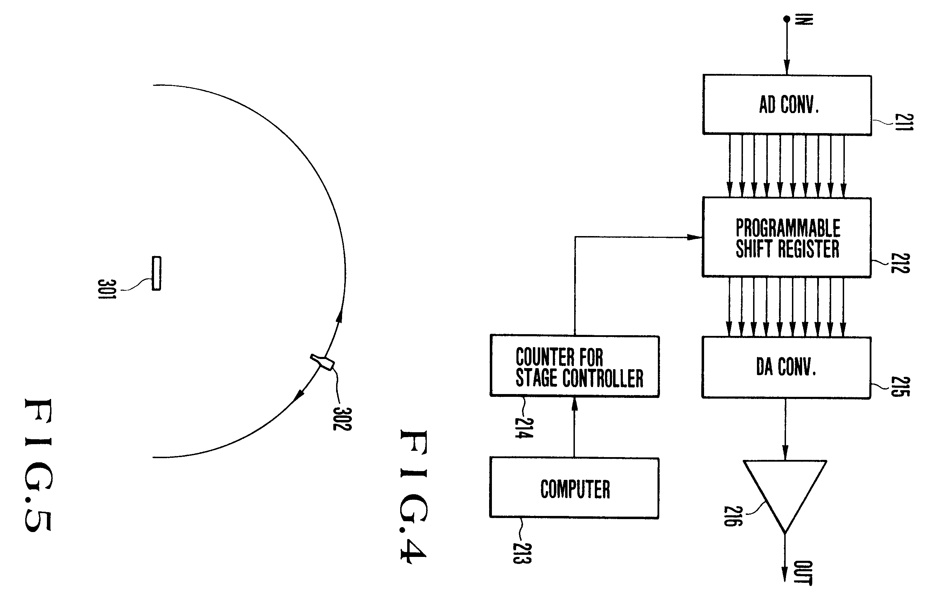

The resultant atmospheric ultrasonic transducer is used in an ultrasonic transmitter shown in Fig. 3. Referring to Fig. 3, the upper or common electrode 105 constituting the transducer 100 is connected to one terminal of a DC bias power source 205 through a resistor 201. The other terminal of the power source 205 is grounded. The divided electrodes 103, i.e., 103a,... 103n constituting the transducer 100 are respectively connected to programmable time delay units 203a,... 203n, and the units 203a,... 203n are commonly connected to one terminal of an AC signal source 204. The other terminal of the AC signal source 204 is grounded. Each of the programmable time delay units 203a to 203n is arranged, as shown in Fig. 4. The delay times are shorter in a direction from 203a to 203n. Referring to Fig. 4, reference numeral 211 denotes an AD converter, connected to an input terminal IN, for receiving an AC signal from the AC signal source 204 and converting it into a digital signal; 212, a programmable shift register for receiving an output from the AD converter 211; 214, a counter for stage controller for controlling the programmable shift register 212 on the basis of an instruction from a computer 213 and controlling the output timings of the shift register 212 for supplying an output to a DA converter 215. The counter 214 outputs a count to the programmable shift register 212 when it counts a predetermined number of pulses supplied from the computer 213 or when the count reaches a reference count from the computer 213. The output from the shift register 212 is thus supplied to the DA converter 215 and is converted into an analog signal. The analog signal is amplified by an amplifier 216, and the amplified analog signal is supplied to one of electrodes 217a to 217n through an output terminal OUT. For example, if the DC bias power source 205 generates a voltage of 200 V, the AC signal source 204 generates five sine waves having an amplitude of 10 $V_{pp}$ and a frequency of 50 kHz. The resultant AC signal is commonly supplied to the programmable time delay units 203a to 203n. Since the delay units are arranged such that the delay times are shorter in the units toward the unit 203n, the AC signal is first supplied to the divided electrode 103n of the transducer 100. Therefore, an ultrasonic wave is generated by a voltage applied between the electrodes 103n and 105. Subsequently, an output from the programmable time delay unit 203n-1 is supplied to the divided electrode 103n-1 of the transducer, and an ultrasonic wave is generated from the corresponding electrodes. The ultrasonic waves are sequentially generated from the electrodes farther from the electrode 103n. Finally, an ultrasonic wave is generated from the divided electrode 103a. Reference numeral 206 in Fig. 3 denotes a wave front of the ultrasonic waves generated by the transducer 100.

The arrangement in Fig. 4 is an example of the programmable time delay unit. A known arrangement may be used wherein the number of stages of the shift register 212 is changed in response to an output from the counter 214 to determine the delay time.

Fig. 5 shows a positional relationship in an ultrasonic scanning test system to discriminate directivity of the atmospheric ultrasonic transducer. Referring to Fig. 5, reference numeral 301 denotes an atmospheric ultrasonic transducer as a sample characterized by the present construction and subjected to distance metering. A microphone 302 is arranged to move along an arc of a circle having a radius of 30 cm and the microphone 302 serving as the center of movement. In this construction, a type 4138 available from Brüel & Kjaer is used. The microphone 302 is moved along the arc to test the directivity, and the obtained results are as shown in Figs. 6a to 6c.

Fig. 6a shows the results when all elements transmit ultrasonic waves at an identical phase. More specifically, the delay times of the programmable time delay units in Fig. 3 are all set to be zero or an identical value.

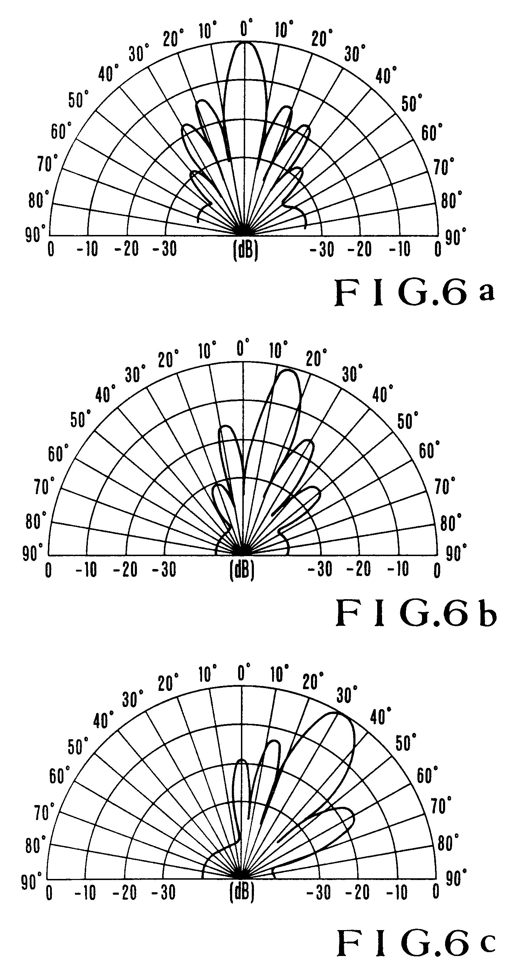

Fig. 6b shows the results when a phase lag between the adjacent electrodes is 0.64 $\mu$sec. More specifically, the delay times of the adjacent programmable time delay units are prolonged for every 0.64 $\mu$sec.

Fig. 6c shows the results when a phase lag between the adjacent electrodes is 1.59 $\mu$sec. As is apparent from the characteristics in Figs. 6a to 6c, the ultrasonic waves are emitted in directions at angles of $0°$, $13°$ and $33°$. The results coincide with the case wherein 32 point sound waves are aligned at an interval of 1 mm.

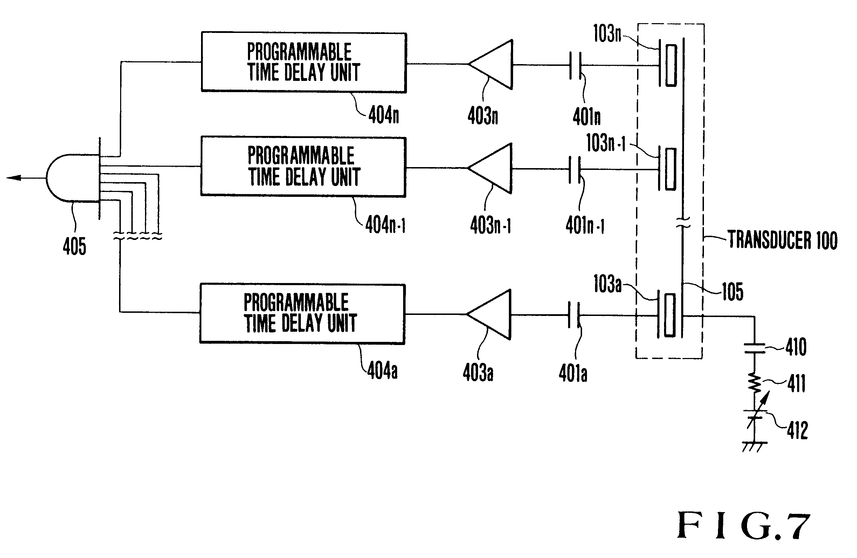

Fig. 7 shows a circuit arrangement when the atmospheric ultrasonic transducer is used as a receiver. Referring to Fig. 7, the upper or common electrode 105 of the transducer 100 is connected to a DC power source 412 through a capacitor 410 and a resistor 411. The divided electrodes 103a to 103n of the transducer 100 are connected to preamplifiers 403a to 403n through capacitors 401a to 401n, respectively. Outputs from the preamplifiers 403a to 403n are supplied to programmable time delay units 404a to 404n for changing the delay times. The reception pulses extracted from the discrete divided electrodes are phase-locked and are added by an AND gate 405. The output from the AND gate 405 is supplied to the next stage. In this case, the direction in which the signal is received is determined according to the lengths of the delay times of the adjacent programmable time delay units.

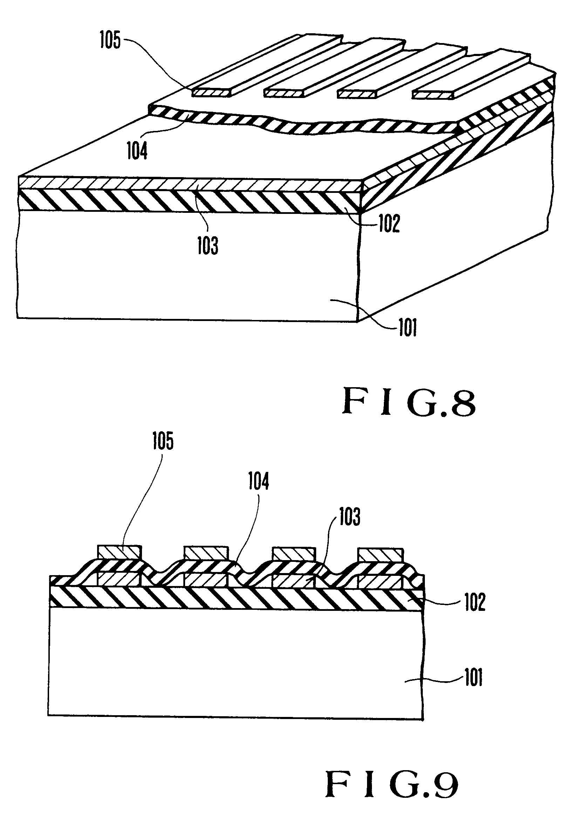

Fig. 8 shows another atmospheric ultrasonic transducer similar to that of Figs. 1 and 2, in which the upper electrode is the common electrode, and the lower electrode is constituted by the divided electrodes. In the Fig. 8 construction, the upper electrode is constituted by divided electrodes, and the lower electrode is the common electrode. The transducer of this type is manufactured as follows. A 1,000-Å thick silicon oxide film 102 is formed on a silicon substrate 101. An aluminum film having a thickness of 5,000 Å to 1 $\mu$m is deposited on the silicon oxide film 102 to constitute a common lower electrode 103A. A polymer film 104 made of polyester and deposited with an aluminum film having a thickness of about 500 to 1,000 Å is adhered to the silicon oxide film 102 on the silicon substrate 101. The entire or partial peripheral portion of the polymer film 104 is fixed to the silicon oxide film on the substrate and is then etched by a known etching method to obtain parallel divided electrodes 105 at a predetermined interval.

Fig. 9 shows still an of the present invention. Divided electrodes constituting the upper and lower electrodes are positioned in a one-to-one correspondence. A method of manufacturing this transducer is described below.

A 1,000-Å thick silicon oxide film 102 is formed on a silicon substrate 101, and an aluminum film having a thickness of about 5,000 Å to 1 $\mu$m is deposited on the silicon oxide film 102. The aluminum film is photoetched to obtain parallel divided electrodes 103 spaced apart at a predetermined pitch.

Subsequently, a polymer film 104 deposited with an aluminum film having a thickness of about 500 to 1,000 Å is adhered to the resultant structure. The entire or partial peripheral portion of the polymer film 104 is fixed to the silicon oxide film 102 on the silicon substrate 101. The aluminum film on the polymer film 104 is photoetched according to the lower electrode pattern. In this case, if the aluminum film is excessively thick, the lower electrode pattern cannot be observed, and proper etching cannot be performed. However, since it is essential to obtain an identical potential at the respective elements, the aluminum electrode deposited on the polymer film can be made thin to eliminate this problem. The array type ultrasonic transducers of the constructions in Figs. 8 and 9 are subjected to an ultrasonic scanning test by connecting time delay units thereto in the same manner as in the construction of Figs. 1 and 2. Substantially the same characteristics as in the embodiment of Figs. 1 and 2 can be obtained in the construction of Fig. 8. However in a transducer according to the invention as shown in Fig. 9, electrical crosstalk components are further reduced, and the directivity sensitivity can be improved.

An array type ultrasonic transducer of the present invention can be easily manufactured in the simple process, thereby increasing the yield of the transducers. In addition, ultrasonic electronic scanning in air can also be performed. It is possible to obtain a two-dimensional original image by electronic scanning of ultrasonic waves transmitted and received with delay times. A DC bias voltage is applied to the transducer. However, if a charged electret film is used, the DC bias circuit can be eliminated, and a self-bias arrangement can be obtained.

## Claims

1. An atmospheric ultrasonic transducer comprising a first electrode (103) formed on an insulating base (101,102), and a polymer film (104) formed on said first electrode (103) and having a second electrode (105) fixed on a surface of the polymer film opposite said first electrode (103), wherein one of said first and second electrodes (103,105) is formed into an array of divided electrodes (103a - 103n), characterized in that each of said first and second electrodes (103,105) is formed into an array of divided electrodes, with the divided electrodes of the respective arrays being positioned in a one-to-one correspondence such as to reduce electrical crosstalk and to improve the directivity sensitivity.

2. A transducer according to Claim 1, wherein said electrodes comprises a plurality of parallel divided electrodes (103,105).

3. A transducer according to Claim 2, wherein said divided electrodes (103,105) have a substantially predetermined interval therebetween.

4. A transducer according to any one of Claims 1 - 3, wherein said first and second electrodes (103,105) are made of a material selected from the group consisting of aluminum and gold.

5. A transducer according to any one of Claims 1 - 4, wherein part of a peripheral portion of said polymer film (104) is fixed to the insulating base (101,102).

6. A transducer according to Claim 5, wherein said insulating base (101,102) comprises a silicon substrate (101) and a silicon oxide film (102) formed thereon.

## Revendications

1. Un transducteur atmosphérique ultrasonique comprenant une première électrode (103) placée sur une base isolante (101,102) et un film plastique (104) placé sur ladite première électrode (103), et une deuxième électrode (105) fixée sur une surface du film plastique opposée à ladite première électrode (103), et dans lequel l'une desdites première et deuxième électrodes (103 - 105) est disposée en un faisceau d'électrodes séparées (103a - 103n), caractérisé en ce que chacune desdites première et deuxième électrodes (103, 105) est disposée en un faisceau d'électrodes séparées, les électrodes séparées des faisceaux respectifs étant positionnées en une correspondance bijective, de manière à réduire la diaphonie et améliorer la sensibilité de la directivité.

2. Un transducteur selon la revendication 1, dans lequel lesdites électrodes comprennent une pluralité d'électrodes séparées parallèles (103, 105).

3. Un transducteur selon la revendication 2, dans lequel lesdites électrodes séparées (103, 105) sont écartées d'un intervalle substantiellement prédéterminé.

4. Un transducteur selon l'une quelconque des revendications 1 à 3, dans lequel lesdites première et deuxième électrodes (103, 105) sont construites en un matériau provenant du groupe aluminium et or.

5. Un transducteur selon l'une quelconque des revendications 1 à 4, dans lequel une partie d'une section périphérique dudit film plastique (104) est fixée à la base isolante (101, 102).

6. Un transducteur selon la revendication 5, dans lequel la base isolante (101, 102) comprend un substrat en silicium (101) recouvert par un film en oxyde de silicium (102).

## Patentansprüche

1. Atmosphärischer Ultraschallwandler mit einer auf eine isolierende Basis (101, 102) aufgebrachten ersten Elektrode (103) und einem auf die erste Elektrode (103) aufgebrachten Polymerfilm (104), und einer zweiten Elektrode (105), die auf einer der ersten Elektrode (103) gegenüberliegenden Oberfläche des Polymerfilmes fixiert ist, wobei eine der ersten und zweiten Elektroden (103, 105) als Array unterteilter Elektroden (103a - 103n) ausgebildet ist, dadurch gekennzeichnet, daß jede der ersten und zweiten Elektroden (103, 105) als Array unterteilter Elektroden ausgebildet ist, wobei sich die unterteilten Elektroden der jeweiligen Arrays Eins-zu-Eins entsprechend gegenüberliegen, um elektrisches Übergreifen zu reduzieren und die Richtungssensitivität zu verbessern.

2. Wandler nach Anspruch 1, dessen Elektroden eine Vielzahl parallel unterteilter Elektroden (103, 105) umfassen.

3. Wandler nach Anspruch 1 oder 2, dessen unterteilte Elektroden (103, 105) zwischen sich ein im wesentlichen vorbestimmtes Intervall haben.

4. Wandler nach einem der Ansprüche 1 bis 3, dessen erste und zweite Elektroden (103, 105) aus einem aus der aus Gold und Aluminium bestehenden Gruppe ausgewählten Material hergestellt sind.

5. Wandler nach einem der Ansprüche 1 bis 4, bei dem ein Teil eines peripherischen Abschnittes des Polymerfilmes (104) auf der isolierenden Basis (101, 102) fixiert ist.

6. Wandler nach Anspruch 5, dessen isolierende Basis (101, 102) im wesentlichen aus einem Siliziumsubstrat (101) und einem darauf aufgebrachten Siliziumoxidfilm (102) besteht.

# FIG.1

# FIG.2

FIG.3

IN → AD CONV. (211) → PROGRAMMABLE SHIFT REGISTER (212) → DA CONV. (215) → (216) → OUT

COUNTER FOR STAGE CONTROLLER (214) ← COMPUTER (213)

**F I G.4**

302

301

**F I G.5**

F I G.6 a

F I G.6 b

F I G.6 c

PROGRAMMABLE TIME DELAY UNIT — 404n
403n
401n
103n

PROGRAMMABLE TIME DELAY UNIT — 404n-1
403n-1
401n-1
103n-1

PROGRAMMABLE TIME DELAY UNIT — 404a
403a
401a
103a

405

TRANSDUCER 100

105

410
411
412

**F I G.7**

EP 0 231 596 B1

# F I G.8

# F I G.9